# EUROPÄISCHE PATENTSCHRIFT

(11) **EP 4 231 186 B1**
(45) Veröffentlichungstag und Bekanntmachung des Hinweises auf die Patenterteilung: **24.07.2024**
(21) Anmeldenummer: 23152138.6
(22) Anmeldetag: 09.02.2022
(51) Int. Cl.: G06F 21/62, G06Q 10/1091, G07C 1/10

(54) **ZEIT- UND/ODER ANWESENHEITSERFASSUNGSEINRICHTUNG; SYSTEM; VERFAHREN ZUM BETREIBEN EINER ZEIT- UND/ODER ANWESENHEITSERFASSUNGSEINRICHTUNG; COMPUTERPROGRAMMPRODUKT**
TIME AND/OR PRESENCE DETECTION DEVICE; SYSTEM; METHOD FOR OPERATING A TIME AND/OR PRESENCE DETECTION DEVICE; COMPUTER PROGRAM PRODUCT
DISPOSITIF DE DÉTECTION D'HEURE ET/OU DE PRÉSENCE, SYSTÈME, PROCÉDÉ DE FONCTIONNEMENT D'UN DISPOSITIF DE DÉTECTION D'HEURE ET/OU DE PRÉSENCE, PRODUIT-PROGRAMME INFORMATIQUE

(43) Veröffentlichungstag der Anmeldung: 23.08.2023
(62) Teilanmeldung aus: 22155945.3
(73) Patentinhaber: dormakaba EAD GmbH, 78056 Villingen-Schwenningen (DE)
(72) Erfinder: Reinbold, Andreas, 78056 Villingen-Schwenningen (DE); Ruof, Martin, 78056 Villingen-Schwenningen (DE); Meiss, Elmar, 78056 Villingen-Schwenningen (DE); Koeppinger, Hartmut, 78056 Villingen-Schwenningen (DE); Schwab, Heinz, 78056 Villingen-Schwenningen (DE)
(74) Vertreter: Balder IP Law, S.L.

(56) Entgegenhaltungen:
- JP-A- 2001 184 308
- US-A1- 2021 326 811

## Beschreibung

Die vorliegende Erfindung betrifft eine Zeit- und/oder Anwesenheitserfassungseinrichtung zur Zeit- und/oder Anwesenheitserfassung von Personen. Ferner betrifft die Erfindung ein System, aufweisend eine derartige Zeit- und/oder Anwesenheitserfassungseinrichtung, sowie ein Verfahren zum Betreiben einer solchen Zeit- und/oder Anwesenheitserfassungseinrichtung, und ein Computerprogrammprodukt.

Zeit- und/oder Anwesenheitserfassungseinrichtungen sind allgemein bekannt und dienen beispielsweise zur Erfassung und zum Nachhalten der Arbeitszeiten von in einem Unternehmen beschäftigten Personen. Auch für andere Personen, beispielsweise externe Dienstleister, können derartige Vorrichtungen Anwendung finden. Solche Zeit- und/oder Anwesenheitserfassungseinrichtungen sind häufig im Eingangsbereich von Gebäuden angebracht, sodass die Beschäftigten die Vorrichtungen zu Beginn ihrer Arbeitszeit und zum Ende ihrer Arbeitszeit erreichen.

An die Handhabung und das Nachhalten von personenbezogenen Daten werden dabei immer höhere Anforderungen gestellt, um Datenschutz zu gewährleisten. Gleichzeitig arbeiten immer mehr Menschen mobil an verschiedenen Orten.

US 2021/0326811 A1 offenbart ein Stechuhrsystem mit einem thermischen Lesegerät, das so konfiguriert ist, dass es das Ein- und Ausstempeln von Mitarbeitern handhabt, einen Körpertemperaturmesswert eines Mitarbeiters erfasst, bevor dieser sich zur Arbeit anmeldet, das Einstempeln und Betreten eines Arbeitsplatzes verhindert, wenn ein Temperaturschwellenwert überschritten wird, und die Kontakte des Mitarbeiters während der Arbeitsperiode verfolgt. Eine Stechuhr des Stechuhrsystems stellt fest, ob ein Stechereignis eines Mitarbeiters für eine Temperaturmessung in Frage kommt. Ob das Ereignis für eine Temperaturmessung in Frage kommt oder nicht, hängt von den Kriterien des Mitarbeiters und den in den Betriebsparametern festgelegten Ereigniskriterien ab. Die Stechuhr kann den Erfolgs- /Misserfolgsstatus der Messung, den tatsächlichen Temperaturwert und das Ergebnis der Schwellenwertprüfung lokal speichern.

Es besteht daher Bedarf an Systemen, die eine zuverlässige Zeit- und Anwesenheitserfassung ermöglichen und die gleichzeitig effizient funktionieren, um unnötige Wartezeiten für die Nutzer an einem Zeiterfassungsterminal zu vermeiden, insbesondere zu Stoßzeiten oder typischen Zeiten für Schichtwechsel, beispielsweise morgens oder abends.

Vor diesem Hintergrund stellt sich die Aufgabe, eine vorteilhafte Zeit- und/oder Anwesenheitserfassungseinrichtung bereitzustellen, mit der vorzugsweise geringe Wartezeiten erreichbar sind und/oder ein ressourcensparende und/oder energiesparende Verwendung möglich wird. Es stellt sich ferner die Aufgabe, ein entsprechendes System und ein Verfahren zum Betreiben einer Zeit- und/oder Anwesenheitserfassungseinrichtung bereitzustellen.

Die Aufgabe wird gelöst durch eine Zeit- und/oder Anwesenheitserfassungseinrichtung zur Zeit- und/oder Anwesenheitserfassung von Personen,
dadurch gekennzeichnet, dass die Zeit- und/oder Anwesenheitserfassungseinrichtung einen lokalen Speicher aufweist oder mit einem lokalen Speicher verbunden ist, wobei die Zeit- und/oder Anwesenheitserfassungseinrichtung eine Kommunikationsschnittstelle zur Kommunikation mit einem Serversystem aufweist,
wobei in dem lokalen Speicher personenbezogene Daten speicherbar sind, wobei die Zeit- und/oder Anwesenheitserfassungseinrichtung derart konfiguriert ist, dass eine Speicherung von personenbezogenen Daten in dem lokalen Speicher in Abhängigkeit davon erfolgt, welcher Personengruppe aus einer Mehrzahl von Personengruppen eine Person zugeordnet ist.

Erfindungsgemäß kann hierdurch eine vorteilhafte Effizienz für die Zeit- und/oder Anwesenheitserfassung von Personen, beispielsweise von Angestellten eines Unternehmens, erreicht werden. Dadurch, dass eine Speicherung von personenbezogenen Daten in dem lokalen Speicher in Abhängigkeit davon erfolgt, welcher Personengruppe aus einer Mehrzahl von Personengruppen eine Person zugeordnet ist, kann der Datenverkehr zwischen der Zeit- und/oder Anwesenheitserfassungseinrichtung, beispielsweise einem Terminal, und dem Serversystem reduziert werden. Hieraus ergeben sich geringere Wartezeiten und eine geringere Latenz bei Nutzerinteraktionen mit der Zeit- und/oder Anwesenheitserfassung, da eine schnellere Verfügbarkeit relevanter Daten erzielbar ist. Insbesondere können Wartezeiten, die durch eine Kommunikation einer Zeit- und/oder Anwesenheitserfassungseinrichtung mit einem Server bei Buchungsaktionen einzelner Personen an der Zeit- und/oder Anwesenheitserfassungseinrichtung entstehen können, verringert werden. In vorteilhafter Weise kann durch das lokale Speichern von personenbezogenen Daten in dem lokalen Speicher verhindert werden, dass bei Buchungsaktionen von Personen, deren personenbezogene Daten in dem lokalen Speicher hinterlegt sind, bei jeder Buchung eine Kommunikation mit einem entfernten Server erfolgen muss, was insbesondere zu Stoßzeiten, in denen viele Personen gleichzeitig oder in schneller Abfolge Interaktionen mit den Zeit- und/oder Anwesenheitserfassungseinrichtungen eines Gebäudes und/oder Areals durchführen, zu erheblichen Wartezeiten oder einer Überlastung der Kommunikationssysteme oder des Servers führen würde.

Erfindungsgemäß kann durch die Zuordnung von Personen zu bestimmten Personengruppen, das Speicherverhalten für die personenbezogenen Daten der Personen beeinflusst werden. Erfindungsgemäß kann somit eine dynamische Speicherverwaltung und/oder eine dynamische Verwaltung von personenbezogenen Daten über verschiedene Standorte eines Unternehmens erfolgen.

Es ist erfindungsgemäß hierdurch beispielsweise möglich, für Personen, die regelmäßig das gleiche Gebäude und/oder Areal betreten, personenbezogene Daten lokal in dem lokalen Speicher zu speichern, sodass für diese Personen nicht bei jedem Buchungsvorgang ein zentrales Serversystem involviert werden muss.

Die erfindungsgemäße Zeit- und/oder Anwesenheitserfassungseinrichtung weist insbesondere Computermittel auf, mit deren Hilfe die Konfiguration der Zeit- und/oder Anwesenheitserfassungseinrichtung implementiert ist.

Die erfindungsgemäße Zeiterfassungseinrichtung und/oder Anwesenheitserfassungseinrichtung kann insbesondere als Arbeitszeiterfassungseinrichtung zur Erfassung von Arbeitszeiten von Personen ausgebildet sein.

Die erfindungsgemäße Zeit- und/oder Anwesenheitserfassungseinrichtung ist vorzugsweise in oder an einem Gebäude und/oder Areal anbringbar, aufstellbar und/oder montierbar. Als Gebäude und/oder Areal kann gemäß der vorliegenden Erfindung insbesondere auch ein Standort eines Unternehmens verstanden werden.

Der lokale Speicher ist vorzugsweise ein nichtflüchtiger Speicher. Es ist denkbar, dass der lokale Speicher durch eine oder mehrere Speichereinheiten gebildet ist.

Es ist gemäß der vorliegenden Erfindung denkbar, dass die Personengruppen insbesondere auch als Kategorien verstanden werden können, denen eine Person zuordenbar ist. Dementsprechend kann die Mehrzahl von Personengruppen als Mehrzahl von Kategoiren verstanden werden, denen eine Person zuordenbar ist. Die unterschiedlichen Personengruppen der Mehrzahl von Personengruppen unterscheiden sich insbesondere dadurch, wie und/oder wo personenbezogene Daten von Personen dieser Personengruppen gespeichert werden. Es ist denkbar, dass die personenbezogenen Daten aller Personen, die jeweils der gleichen Personengruppe zugeordnet sind, gleichbehandelt werden. Die Mehrzahl von Personengruppen kann beispielsweise zwei Personengruppen, drei Personengruppen oder mehr als drei Personengruppen umfassen.

Unter personenbezogenen Daten können gemäß einer Ausführungsform der vorliegenden Erfindung insbesondere Daten verstanden werden, die derart personenbezogen sind, dass sie eindeutig einer bestimmten natürlichen Person zugeordnet sind oder diese Zuordnung zumindest mittelbar erfolgen kann. Die personenbezogenen Daten können erfindungsgemäß daher auch personenbeziehbare Daten umfassen. Es ist denkbar, dass personenbezogene Daten gemäß einer Ausführungsform der vorliegenden Erfindung Personalstammdaten umfassen.

Es ist erfindungsgemäß bevorzugt denkbar,
dass personenbezogene Daten in dem lokalen Speicher verschlüsselt, beispielsweise kennwortverschlüsselt, gespeichert sind, und/oder dass personenbezogene Daten mithilfe der Zeit- und/oder Anwesenheitserfassungseinrichtung nur unter Verwendung einer Verschlüsselung, beispielswiese einer Kennwortverschlüsselung, abrufbar oder durch die Zeit- und/oder Anwesenheitserfassungseinrichtung anzeigbar bzw. darstellbar sind. Auch andere oder zusätzliche Schlüssel- bzw. Verschlüsselungsfunktionen sind denkbar. Hierdurch kann ein vorteilhafter Datenschutz erreicht werden.

Es ist gemäß einer Ausführungsform der vorliegenden Erfindung denkbar, dass eine Person über eine Eingabeeinrichtung der Zeit- und/oder Anwesenheitserfassungseinrichtung personenbezogene Daten eingeben und/oder ändern kann. Es ist denkbar, dass einer Person über eine Wiedergabeeinrichtung der Zeit- und/oder Anwesenheitserfassungseinrichtung, beispielsweise über einen Bildschirm, personenbezogene Daten angezeigt werden können. Es ist somit denkbar, dass die Person über die Zeit- und/oder Anwesenheitserfassungseinrichtung auf ihre personenbezogenen Daten zugreifen kann und beispielsweise Urlaubstage eintragen oder anfragen kann oder ihre Personalstammdaten einsehen oder ändern kann. Es ist ferner denkbar, dass eine Person über die Zeit- und/oder Anwesenheitserfassungseinrichtung mit einer Personalabteilung des Unternehmens kommunizieren kann, dem die Zeit- und/oder Anwesenheitserfassungseinrichtung zugeordnet ist. Beispielsweise ist es denkbar, dass Nachrichten der Personalabteilung des Unternehmens an die Person auf der Wiedergabeeinrichtung der Zeit- und/oder Anwesenheitserfassungseinrichtung anzeigbar sind und/oder dass die Person mithilfe der Eingabeeinrichtung der Zeit- und/oder Anwesenheitserfassungseinrichtung Nachrichten an die Personalabteilung des Unternehmens erzeugen kann.

Vorteilhafte Weiterbildungen und Ausgestaltungen der vorliegenden Erfindung können den abhängigen Ansprüchen entnommen werden.

Gemäß einer Ausführungsform der vorliegenden Erfindung ist es vorgesehen, dass die Mehrzahl von Personengruppen zumindest eine erste Personengruppe umfasst,
wobei personenbezogenen Daten betreffend Personen, die der ersten Personengruppe zugeordnet sind, in dem lokalen Speicher gespeichert sind. Der ersten Personengruppe sind vorzugsweise Personen zugeordnet, die ein Gebäude und/oder Areal, an dem die Zeit- und/oder Anwesenheitserfassungseinrichtung angeordnet ist, regelmäßig betreten und verlassen. Der ersten Personengruppe sind somit vorzugsweise solche Personen zugeordnet, deren Hauptarbeitsplatz in dem Gebäude und/oder Areal liegt, an dem die Zeit- und/oder Anwesenheitserfassungseinrichtung angeordnet ist.

Der ersten Personengruppe sind vorzugsweise solche Personen zugeordnet:
- die das Gebäude und/oder Areal, an dem die Zeit- und/oder Anwesenheitserfassungseinrichtung angeordnet ist, in einem festlegbaren Zeitraum häufiger als ein wählbarer Schwellenwert nutzen; und/oder
- die die Zeit- und/oder Anwesenheitserfassungseinrichtung, in einem festlegbaren Zeitraum häufiger als ein wählbarer Schwellenwert nutzen. Für Personen, die der ersten Personengruppe zugeordnet sind, kann durch die Speicherung der personenbezogenen Daten in dem lokalen Speicher in vorteilhafter Weise erreicht werden, dass bei Interkationen bzw. Buchungen solcher Personen an der Zeit- und/oder Anwesenheitserfassungseinrichtung, kein Abrufen und/oder Übermitteln von Daten an ein Serversystem erfolgen muss, wodurch Ressourcen und Energie gespart werden können. Ferner können hierdurch Wartezeiten, die mit der Kommunikation mit einem solchen Serversystem typischerweise einhergehen, vermieden werden. Es ist denkbar, dass die in dem lokalen Speicher gespeicherten personenbezogenen Daten der ersten Personengruppe mit dem Serversystem synchronisiert werden, insbesondere in regelmäßigen oder unregelmäßigen Abständen. Es ist beispielsweise denkbar, dass bei einer Änderung von personenbezogenen Daten in dem Serversystem, betreffend eine oder mehrere Personen, die der ersten Personengruppe zugeordnet sind, diese Änderungen an die Zeit- und/oder Anwesenheitserfassungseinrichtung übermittelt werden, beispielsweise zu festlegbaren Zeitpunkten, in wählbaren Zeitfenstern oder unmittelbar nach der Änderung.

Es ist gemäß einer Ausgestaltung der vorliegenden Erfindung denkbar, dass personenbezogene Daten für den lokalen Standort, an dem die Zeit- und/oder Anwesenheitserfassungseinrichtung angeordnet ist, durch die Zeit- und/oder Anwesenheitserfassungseinrichtung von dem Serversystem abgerufen werden und in dem lokalen Speicher gespeichert werden. Insbesondere werden somit die personenbezogenen Daten von Personen, die der ersten Personengruppe zugeordnet sind, durch die Zeit- und/oder Anwesenheitserfassungseinrichtung von dem Serversystem abgerufen und in dem lokalen Speicher gespeichert.

Gemäß einer Ausführungsform der vorliegenden Erfindung ist es vorgesehen, dass die Zeit- und/oder Anwesenheitserfassungseinrichtung - bei einer Nutzerinteraktion einer ersten Person, die der ersten Personengruppe zugeordnet ist, mit der die Zeit- und/oder Anwesenheitserfassungseinrichtung - zur Erfassung einer Zeitinformation konfiguriert ist,
wobei die Zeit- und/oder Anwesenheitserfassungseinrichtung dazu konfiguriert ist, die erfasste Zeitinformation, betreffend die Nutzerinteraktion der ersten Person, in dem lokalen Speicher zu speichern, vorzugsweise als Teil der personenbezogenen Daten der ersten Person zur Erfassung von Anwesenheitszeiten und/oder Arbeitszeiten der ersten Person. Die bei der Nutzerinteraktion erfasste Zeitinformation bezieht sich dabei insbesondere auf den Zeitpunkt der Nutzerinteraktion. Hierdurch können Anwesenheitszeit- und/oder Arbeitszeit-Profile für Personen der ersten Personengruppe in dem lokalen Speicher hinterlegt sein, wobei die Anwesenheitszeiten und/oder Arbeitszeiten der Personen der ersten Personengruppe in dem lokalen Speicher nachgehalten werden. Es ist denkbar, dass die in dem lokalen Speicher nachgehaltenen Anwesenheitszeiten und/oder Arbeitszeiten der Personen der ersten Personengruppe, vorzugsweise in regelmäßigen oder unregelmäßigen Abständen, von der Zeit- und/oder Anwesenheitserfassungseinrichtung an das Serversystem übermittelt werden. Hierdurch kann in unregelmäßigen oder regelmäßigen Abständen ein Update der Anwesenheitszeiten und/oder Arbeitszeiten der Personen der ersten Personengruppe in dem zentralen Serversystem erfolgen.

Für die Nutzerinteraktionen, die Personen mit der Zeit- und/oder Anwesenheitserfassungseinrichtung durchführen, kommen erfindungsgemäß unterschiedliche technische Ausgestaltungen in Frage. Es ist denkbar, dass die Nutzerinteraktion einer Person mit der Zeit- und/oder Anwesenheitserfassungseinrichtung ein Empfangen und/oder Auslesen einer Identifikationsinformation dieser Person durch die Zeit- und/oder Anwesenheitserfassungseinrichtung umfasst, vorzugsweise wobei das Empfangen und/oder Auslesen der Identifikationsinformation dieser Person durch:
- eine Eingabeeinrichtung der Zeit- und/oder Anwesenheitserfassungseinrichtung; und/oder
- eine Kommunikationsschnittstelle der Zeit- und/oder

Anwesenheitserfassungseinrichtung; und/oder
- einen Sensor der Zeit- und/oder Anwesenheitserfassungseinrichtung erfolgt. Als Sensor kommen beispielsweise optische Sensoren in Frage, wobei die Nutzerinteraktion das Auslesen einer ID-Karte einer Person durch einen solchen Sensor umfasst. Alternativ oder zusätzlich kann die Nutzerinteraktion beispielsweise mithilfe von RFID (radio-frequency identification) und/oder NFC (near field communication) erfolgen. Eine Person führt hierfür eine entsprechende RFID-Identifikationsinformation oder eine NFC-Identifikationsinformation mit und die Zeit- und/oder Anwesenheitserfassungseinrichtung liest die RFID-Identifikationsinformation oder eine NFC-Identifikationsinformation als Teil der Nutzerinteraktion aus.

Gemäß einer Ausführungsform der vorliegenden Erfindung ist es vorgesehen, dass die Mehrzahl von Personengruppen eine zweite Personengruppe umfasst, wobei personenbezogene Daten betreffend Personen, die der zweiten Personengruppe zugeordnet sind, durch die Zeit- und/oder Anwesenheitserfassungseinrichtung von dem Serversystem abrufbar sind, vorzugsweise wobei die personenbezogenen Daten betreffend Personen, die der zweiten Personengruppe zugeordnet sind, in dem Serversystem gespeichert sind, besonders bevorzugt wobei die personenbezogenen Daten betreffend Personen, die der zweiten Personengruppe zugeordnet sind, nicht in dem lokalen Speicher gespeichert werden. Es ist somit vorteilhafterweise denkbar, dass die personenbezogenen Daten von Personen, die der zweiten Personengruppe zugeordnet sind, nicht in dem lokalen Speicher der Zeit- und/oder Anwesenheitserfassungseinrichtung gespeichert sind oder gespeichert werden. Hierdurch können Ressourcen im lokalen Speicher bzw. Speicherplatz gespart werden. Der zweiten Personengruppe sind beispielsweise solche Personen zugeordnet, die das Gebäude und/oder Areal an dem die Zeit- und/oder Anwesenheitserfassungseinrichtung angebracht ist, selten oder nie nutzen.

Vorzugsweise ist es denkbar, dass sowohl die der ersten Personengruppe als auch die der zweiten Personengruppe zugeordneten Personen Teil eines Kreises von Personen sind, die bei dem gleichen Unternehmen oder bei der gleichen Gruppe von verbundenen Unternehmen angestellt sind. Alternativ oder zusätzlich ist es denkbar, dass sowohl die der ersten Personengruppe als auch die der zweiten Personengruppe zugeordneten Personen Teil eines Kreises von Personen sind, die eine Zugangsberechtigung für den Zugang zu den Gebäuden und/oder Arealen eines Unternehmens oder einer Gruppe von verbundenen Unternehmen haben.

Gemäß einer Ausführungsform der vorliegenden Erfindung ist es denkbar, dass die Zeit- und/oder Anwesenheitserfassungseinrichtung derart konfiguriert ist, dass die Zeit- und/oder Anwesenheitserfassungseinrichtung - bei einer Nutzerinteraktion einer zweiten Person, die der zweiten Personengruppe zugeordnet ist, mit der
Zeit- und/oder Anwesenheitserfassungseinrichtung - eine Zeitinformation, betreffend die Nutzerinteraktion der zweiten Person, erfasst,
wobei die Zeit- und/oder Anwesenheitserfassungseinrichtung derart konfiguriert ist, dass die Zeit- und/oder Anwesenheitserfassungseinrichtung:
--- personenbezogene Daten der zweiten Person, bevorzugt zur Erfassung von Anwesenheitszeiten und/oder Arbeitszeiten der zweiten Person, von dem Serversystem abruft; und/oder
--- die erfasste Zeitinformation, betreffend die Nutzerinteraktion der zweiten Person, von der Zeit- und/oder Anwesenheitserfassungseinrichtung an das Serversystem übermittelt wird, insbesondere zur Ergänzung und/oder Änderung der in dem Serversystem gespeicherten personenbezogenen Daten betreffend die zweite Person. Die Zeitinformation, betreffend die Nutzerinteraktion der zweiten Person, wird vorzugsweise durch das Serversystem als Teil der personenbezogenen Daten betreffend die zweite Person hinterlegt und/oder es erfolgt ein Update der personenbezogenen Daten durch das Serversystem auf Grundlage der erhaltenen Zeitinformation, betreffend die Nutzerinteraktion der zweiten Person. Beispielswiese kann es vorkommen, dass eine zweite Person, die typischerweise die Zeit- und/oder Anwesenheitserfassungseinrichtung nicht benutzt, da sie an einem anderen Standort arbeitet, in Ausnahmefällen doch das Gebäude und/oder Areal betritt, dem die Zeit- und/oder Anwesenheitserfassungseinrichtung zugeordnet ist. In diesem Fall kann durch eine Kommunikation mit dem Server durch die Zeit- und/oder Anwesenheitserfassungseinrichtung ein vorteilhaftes Nachverfolgen der Anwesenheitszeiten und/oder Arbeitszeiten der zweiten Person auch in einer solchen Situation erfolgen bzw. sichergestellt werden.

Gemäß einer Ausführungsform der vorliegenden Erfindung ist es vorgesehen, dass die personenbezogenen Daten ein personenbezogenes Arbeitszeitprofil, insbesondere zur Erfassung von Anwesenheitszeiten und/oder Arbeitszeiten pro Person, umfassen. Es ist denkbar, dass die Zeit- und/oder Anwesenheitserfassungseinrichtung derart konfiguriert ist, dass die Arbeitszeitprofile von Personen, die der ersten Personengruppe zugeordnet sind, bevorzugt zur Erfassung von Anwesenheitszeiten und/oder Arbeitszeiten der Personen der ersten Personengruppe, in dem lokalen Speicher gespeichert sind. Es ist denkbar, dass das Serversystem derart konfiguriert ist, dass die Arbeitszeitprofile von Personen, die der zweiten Personengruppe zugeordnet sind, bevorzugt zur Erfassung von Anwesenheitszeiten und/oder Arbeitszeiten der Personen der zweiten Personengruppe, in dem Serversystem gespeichert sind und vorzugsweise durch die Zeit- und/oder Anwesenheitserfassungseinrichtung abrufbar sind. Insbesondere sind die Arbeitszeitprofile von Personen der zweiten Personengruppe nicht in dem lokalen Speicher der Zeit- und/oder Anwesenheitserfassungseinrichtung hinterlegt, sodass diese bei Bedarf, insbesondere bei einer Interaktion einer Person der zweiten Personengruppe mit der Zeit- und/oder Anwesenheitserfassungseinrichtung durch die Zeit- und/oder Anwesenheitserfassungseinrichtung abrufbar sind.

Gemäß einer Ausführungsform der vorliegenden Erfindung ist es vorgesehen, dass die Zeit- und/oder Anwesenheitserfassungseinrichtung derart konfiguriert ist, dass eine Person:
- in Abhängigkeit einer Anzahl an Nutzerinterkationen dieser Person, insbesondere in einer festlegbaren Zeitspanne, mit der Zeit- und/oder Anwesenheitserfassungseinrichtung; und/oder
- in Abhängigkeit einer Anzahl an Nutzerinterkationen dieser Person, insbesondere in einer festlegbaren Zeitspanne, mit einer oder mehreren zusätzlichen Zeit- und/oder Anwesenheitserfassungseinrichtungen, die dem gleichen Gebäude und/oder Areal zugeordnet sind, wie die Zeit- und/oder Anwesenheitserfassungseinrichtung,
   insbesondere automatisch, einer anderen Personengruppe aus der Mehrzahl von Personengruppen zugeordnet wird. Hierdurch kann eine besonders vorteilhafte dynamische Zuordnung einer Person zu einer Personengruppe der Mehrzahl von Personengruppen erfolgen, insbesondere in Abhängigkeit einer Nutzungsfrequenz der Zeit- und/oder Anwesenheitserfassungseinrichtung und/oder zusätzlicher Zeit- und/oder Anwesenheitserfassungseinrichtungen des gleichen Gebäudes und/oder Areals durch diese Person. Es kann hierdurch teilweise oder vollständig auf eine manuelle Zuordnung der Personen zu den einzelnen Personengruppen der Mehrzahl von Personengruppen verzichtet werden. Es ist denkbar, dass die Zuordnung einer Person zu einer anderen Personengruppe aus der Mehrzahl von Personengruppen durch die Zeit- und/oder Anwesenheitserfassungseinrichtung und/oder durch das Serversystem durchgeführt wird. Gemäß einer Ausführungsform der vorliegenden Erfindung ist es denkbar, dass die Zuordnung von Personen zu einer Personengruppe aus der Mehrzahl der Personengruppen mithilfe einer künstlichen Intelligenz und/oder mithilfe von maschinellem Lernen erfolgt.

Gemäß einer Ausführungsform der vorliegenden Erfindung erfolgt die Zuordnung einer Person zu einer Personengruppe aus der Mehrzahl von Personengruppen über eine Hinterlegung und/oder Speicherung einer Zuordnung einer Identifikationsinformation der Person zu einer Personengruppe aus der Mehrzahl von Personengruppen. Die Hinterlegung und/oder Speicherung der Zuordnung kann beispielsweise in dem lokalen Speicher und/oder dem Serversystem erfolgen.

Die Zeit- und/oder Anwesenheitserfassungseinrichtung ist derart konfiguriert, dass die, insbesondere automatische, Zuordnung einer Person zu einer anderen Personengruppe unter Berücksichtigung der freien Speicherkapazität des lokalen Speichers erfolgt. Es ist somit denkbar, dass die Zuordnung einer Person zu einer anderen Personengruppe in Abhängigkeit der freien Speicherkapazität des lokalen Speichers erfolgt, sodass die Hardwaregegebenheiten der Zeit- und/oder Anwesenheitserfassungseinrichtung vorteilhaft berücksichtigt werden können.

Gemäß einer Ausführungsform der vorliegenden Erfindung ist es denkbar, dass ein dynamischer Lernprozess derart implementiert wird, dass Personen in Abhängigkeit ihrer zurückliegenden Historie von Nutzerinteraktionen mit Zeit- und/oder Anwesenheitserfassungseinrichtungen anderen Personengruppen aus der Mehrzahl der Personengruppen zugeordnet werden können, um das Speicherverhalten bzw. den Speicherort ihrer personenbezogenen Daten zu ändern und an die Historie ihrer Interkationen anzupassen. Es ist beispielsweise denkbar, dass für den Fall, dass eine bestimmte Person eine festlegbare Anzahl an Interaktionen bzw. Buchungen in einem festlegbaren Zeitraum mit einer Zeit- und/oder Anwesenheitserfassungseinrichtung oder mehreren Zeit- und/oder Anwesenheitserfassungseinrichtungen am gleichen Standort durchgeführt hat, automatisiert eine Entscheidung getroffen wird, die personenbezogenen Daten lokal in dieser Zeit- und/oder Anwesenheitserfassungseinrichtung oder diesen Zeit- und/oder Anwesenheitserfassungseinrichtungen zu speichern. Hierdurch ist ein dynamischer Prozess möglich, der eine hohe Effizienz mit einer begrenzten Anzahl an Nutzerprofilen und somit mit begrenztem Speicherplatz in den lokalen Speichern von Zeit- und/oder Anwesenheitserfassungseinrichtungen erlaubt. Es ist dabei in vorteilhafter Weise denkbar, dass die personenbezogenen Daten von Personen, die in einem festlegbaren Zeitraum eine festlegbare Anzahl an Interkationen mit einer Zeit- und/oder Anwesenheitserfassungseinrichtung oder mehreren Zeit- und/oder Anwesenheitserfassungseinrichtungen am gleichen Standort nicht mehr erreicht haben, aktiv aus den lokalen Speichern dieser Zeit- und/oder Anwesenheitserfassungseinrichtung oder Zeit- und/oder Anwesenheitserfassungseinrichtungen aussortiert werden. Hierdurch können beispielsweise die Daten von Personen, die mehrere Wochen nicht mehr ein einem Standort waren, aus den lokalen Speichern gelöscht werden.

Gemäß einer Ausführungsform der vorliegenden Erfindung ist es vorgesehen, dass die Zeit- und/oder Anwesenheitserfassungseinrichtung derart konfiguriert ist, dass:
- bei einer Änderung der Zuordnung einer Person von der ersten Personengruppe zu der zweiten Personengruppe, die in dem lokalen Speicher vorhanden personenbezogenen Daten betreffend diese Person teilweise oder vollständig aus dem lokalen Speicher entfernt werden; und/oder
- bei einer Änderung der Zuordnung einer Person von der zweiten Personengruppe zu der ersten Personengruppe, personenbezogene Daten betreffend diese Person durch die Zeit- und/oder Anwesenheitserfassungseinrichtung von dem Serversystem empfangen werden, wobei die empfangenen personenbezogenen Daten in dem lokalen Speicher gespeichert werden. Hierdurch kann eine vorteilhafte automatisierte Speicherplatzverwaltung für den lokalen Speicher der Zeit- und/oder Anwesenheitserfassungseinrichtung eingerichtet werden.

Gemäß einer Ausführungsform der vorliegenden Erfindung ist es vorgesehen, dass für eine Person, vorzugsweise durch das Serversystem und/oder über eine Interaktion mit einer Eingabeeinrichtung der Zeit- und/oder Anwesenheitserfassungseinrichtung,:
- eine Zuordnung dieser Person zu einer Personengruppe aus der Mehrzahl von Personengruppen, insbesondere zumindest zur ersten Personengruppe oder zur zweiten Personengruppe, festlegbar und/oder änderbar ist;
   und/oder
- eine Einstellung festlegbar ist, die eine automatische Zuordnung dieser Person zu einer anderen Personengruppe der Mehrzahl von Personengruppen verhindert. Hierdurch kann für Personen manuell eine Zuordnung festgelegt werden bzw. ein Label gesetzt werden, das eine automatisierte Änderung der Zuordnung dieser Person zu einer Personengruppe unterbindet. Dies kann beispielswiese bei "fliegenden" Mitarbeitern eines Unternehmens besonders vorteilhaft sein, die über einen Zeitraum von mehreren Tagen ein bestimmtes Gebäude und/oder Areal nutzen, das sie später nicht mehr oder nur noch sehr selten nutzen werden. Es kann somit beispielsweise manuell verhindert werden, dass die personenbezogenen Daten einer solche Person infolge ihres mehrmaligen Nutzens eines bestimmten Gebäudes und/oder Areals automatisiert auf eine oder mehrere Zeit- und/oder Anwesenheitserfassungseinrichtungen dieses Gebäudes und/oder Areals heruntergeladen werden.

Ein weiterer Gegenstand der vorliegenden Erfindung ist ein System, aufweisend eine Zeit- und/oder Anwesenheitserfassungseinrichtung gemäß einer Ausführungsform der vorliegenden Erfindung,
wobei die Zeit- und/oder Anwesenheitserfassungseinrichtung insbesondere an oder in einem Gebäude und/oder Areal angeordnet ist.

Gemäß einer Ausführungsform der vorliegenden Erfindung ist es vorgesehen, dass das System ferner das Serversystem umfasst, wobei das Serversystem insbesondere zur Kommunikation mit der Zeit- und/oder Anwesenheitserfassungseinrichtung über die Kommunikationsschnittstelle der Zeit- und/oder Anwesenheitserfassungseinrichtung konfiguriert ist. Die Kommunikation zwischen der Zeit- und/oder Anwesenheitserfassungseinrichtung kann drahtgebunden und/oder drahtlos erfolgen. Es ist gemäß einer Ausführungsform der vorliegenden Erfindung denkbar, dass das Serversystem mithilfe von einem oder mehreren Computern ausgebildet ist. Der eine oder die mehreren Computer des Serversystem können am gleichen Ort oder an unterschiedlichen Orten angeordnet sein.

Gemäß einer Ausführungsform der vorliegenden Erfindung, insbesondere des erfindungsgemäßen Systems, ist es vorgesehen, dass eine weitere Zeit- und/oder Anwesenheitserfassungseinrichtung an oder in einem weiteren Gebäude und/oder einem weiteren Areal angeordnet ist,
wobei die weitere Zeit- und/oder Anwesenheitserfassungseinrichtung eine Kommunikationsschnittstelle zur Kommunikation mit dem Serversystem aufweist, wobei in einem weiteren lokalen Speicher der weiteren Zeit- und/oder Anwesenheitserfassungseinrichtung personenbezogene Daten betreffend Personen einer weiteren ersten Personengruppe gespeichert sind,
wobei die erste Personengruppe und die weitere erste Personengruppe zumindest teilweise unterschiedliche Personen umfassen. Das weitere Gebäude und/oder weitere Areal, an dem die weitere Zeit- und/oder Anwesenheitserfassungseinrichtung angeordnet ist, befindet sich insbesondere an einem anderen Standort als das Gebäude und/oder Areal, an dem die Zeit- und/oder Anwesenheitserfassungseinrichtung angeordnet ist. Das weitere Gebäude und/oder Areal wird daher typischerweise durch andere Personen genutzt als das Gebäude und/oder Areal. Die lokalen Speicher von Zeit- und/oder Anwesenheitserfassungseinrichtungen eines Unternehmens oder einer Gruppe von Unternehmen können somit standortabhängig mit personenbezogenen Daten von unterschiedlichen Personen bestückt werden. Hierdurch kann eine vorteilhafte Zeiterfassung auch standortübergreifend realisiert werden, wobei jeweils eine effektive Nutzung von lokalen Speichern der Zeit- und/oder Anwesenheitserfassungseinrichtungen erfolgt.

Gemäß einer Ausführungsform der vorliegenden Erfindung ist es bevorzugt denkbar, ein unternehmensweites System zu implementieren, das zentral in einem Serversystem personenbezogene Daten der Mitarbeiterinnen und Mitarbeiter aufweist, wobei Zeit- und/oder Anwesenheitserfassungseinrichtungen, insbesondere Terminals, schrittweise die personenbezogenen Daten für den lokalen Standort, an dem sie angeordnet sind, von dem Serversystem erhalten oder abrufen und diese lokal in einem lokalen Speicher hinterlegen. Es ist dabei denkbar, dass die personenbezogenen Daten, die von den Zeit- und/oder Anwesenheitserfassungseinrichtungen bezogen werden, zusätzlich weiterhin in dem Serversystem gespeichert bleiben. Alternativ ist es denkbar, dass Personen, die lokal an einem Standort tätig sind, derart einer Personengruppe aus der Mehrzahl der Personengruppen zugeordnet werden, dass ihre personenbezogenen Daten ausschließlich lokal bei den Zeit- und/oder Anwesenheitserfassungseinrichtungen gespeichert werden und vorzugsweise nicht mehr in dem Serversystem gespeichert werden. Die personenbezogenen Daten anderer Personen, beispielsweise von fliegenden Mitarbeiterinnen oder Mitarbeitern, werden in dem Serversystem gespeichert, sodass die Zeit- und/oder Anwesenheitserfassungseinrichtungen diese von dem Serversystem abfragen bzw. abrufen können.

Ein weiterer Gegenstand der vorliegenden Erfindung ist ein Verfahren zur Verwendung bzw. zum Betreiben einer Zeit- und/oder Anwesenheitserfassungseinrichtung gemäß einer Ausführungsform der vorliegenden Erfindung oder eines Systems gemäß einer Ausführungsform der vorliegenden Erfindung,
wobei ein Speichern von personenbezogenen Daten in dem lokalen Speicher in Abhängigkeit davon durchgeführt wird, welcher Personengruppe aus einer Mehrzahl von Personengruppen eine Person zugeordnet ist. Das erfindungsgemäße Verfahren einer Zeit- und/oder Anwesenheitserfassungseinrichtung umfasst vorzugsweise die Verwendung der Zeit- und/oder Anwesenheitserfassungseinrichtung zur Zeit- und/oder Anwesenheitserfassung von Personen.

Gemäß einer Ausführungsform der vorliegenden Erfindung, insbesondere des erfindungsgemäßen Verfahrens, ist es vorgesehen, dass in dem lokalen Speicher personenbezogene Daten betreffend Personen gespeichert werden, die der ersten Personengruppe zugeordnet sind.

Das erfindungsgemäße Verfahren ist insbesondere ein computerimplementiertes Verfahren, bei dem ein, mehrere oder alle Schritte des Verfahrens computerimplementiert ausgeführt werden.

Gemäß einer Ausführungsform der vorliegenden Erfindung, insbesondere des erfindungsgemäßen Verfahrens, ist es vorgesehen, dass die Zeit- und/oder Anwesenheitserfassungseinrichtung - bei einer Nutzerinteraktion einer ersten Person, die der ersten Personengruppe zugeordnet ist, mit der Zeit- und/oder Anwesenheitserfassungseinrichtung - eine Zeitinformation erfasst,
wobei die Zeit- und/oder Anwesenheitserfassungseinrichtung die erfasste Zeitinformation in dem lokalen Speicher speichert, vorzugsweise als Teil der personenbezogenen Daten betreffend die erste Person, besonders bevorzugt zur Erfassung von Anwesenheitszeiten und/oder Arbeitszeiten der ersten Person.

Gemäß einer Ausführungsform der vorliegenden Erfindung, insbesondere des erfindungsgemäßen Verfahrens, ist es denkbar, dass die Zeit- und/oder Anwesenheitserfassungseinrichtung - bei einer Nutzerinteraktion einer zweiten Person einer zweiten Personengruppe mit der Anwesenheits- und/oder Zeit- und/oder Anwesenheitserfassungseinrichtung - eine Zeitinformation, betreffend die Nutzerinteraktion der zweiten Person, erfasst,
wobei die Zeit- und/oder Anwesenheitserfassungseinrichtung:
--- personenbezogene Daten betreffend die zweite Person, besonders bevorzugt zur Erfassung von Anwesenheitszeiten und/oder Arbeitszeiten der zweiten Person, von dem Serversystem abruft; und/oder
--- die erfasste Zeitinformation, betreffend die Nutzerinteraktion der zweiten Person an das Serversystem übermittelt wird, insbesondere zur Ergänzung und/oder Änderung der in dem Serversystem gespeicherten personenbezogenen Daten betreffend die zweite Person. Hierdurch wird eine vorteilhaft an die Anwesenheitshäufigkeit einer Person angepasste Handhabung der personenbezogenen Daten möglich.

Ein weiterer Gegenstand der vorliegenden Erfindung ist ein Computerprogrammprodukt, umfassend Befehle, die bei der Ausführung durch Computermittel, insbesondere durch eine Zeit- und/oder Anwesenheitserfassungseinrichtung gemäß einer Ausführungsform der vorliegenden Erfindung und/oder durch ein System gemäß einer Ausführungsform der vorliegenden Erfindung, diese veranlassen, ein Verfahren gemäß einer Ausführungsform der vorliegenden Erfindung durchzuführen.

Die Merkmale, Ausführungsformen und Vorteile, die im Zusammenhang mit einem der erfindungsgemäßen Gegenstände beschrieben worden sind, können jeweils auch für die weiteren erfindungsgemäßen Gegenstände Anwendung finden. Insbesondere können für das erfindungsgemäße System, das erfindungsgemäße Verfahren und das erfindungsgemäße Computerprogrammprodukt dabei die Merkmale, Ausführungsformen und Vorteile Anwendung finden, die bereits im Zusammenhang mit der erfindungsgemäßen Zeit- und/oder Anwesenheitserfassungseinrichtung oder im Zusammenhang mit einer Ausführungsform der erfindungsgemäßen Zeit- und/oder Anwesenheitserfassungseinrichtung beschrieben worden sind. Entsprechend können für die erfindungsgemäße Zeit- und/oder Anwesenheitserfassungseinrichtung, das erfindungsgemäße Verfahren und das erfindungsgemäße Computerprogrammprodukt die Merkmale, Ausführungsformen und Vorteile Anwendung finden, die bereits im Zusammenhang mit dem erfindungsgemäßen System oder im Zusammenhang mit einer Ausführungsform des erfindungsgemäßen Systems beschrieben worden sind.

Nachfolgend sollen weitere Vorteile und Einzelheiten der Erfindung anhand der in den Zeichnungen dargestellten Ausführungsbeispiele erläutert werden. Hierin zeigen
- Fig. 1: eine schematische Darstellung eines Systems gemäß einem Ausführungsbeispiel der vorliegenden Erfindung;
- Fig. 2: eine schematische Darstellung eines Systems gemäß einem Ausführungsbeispiel der vorliegenden Erfindung;
- Fig. 3: eine schematische Darstellung einer eine Zeit- und/oder Anwesenheitserfassungseinrichtung gemäß einem Ausführungsbeispiel der vorliegenden Erfindung;
- Fig. 4 bis 9: jeweils schematische Darstellungen von Verfahrenen gemäß Ausführungsbeispielen der vorliegenden Erfindung.

In den verschiedenen Figuren sind gleiche Teile stets mit den gleichen Bezugszeichen versehen und werden daher in der Regel auch jeweils nur einmal benannt bzw. erwähnt.

Die vorliegende Erfindung wird in Bezug auf bestimmte Ausführungsformen und mit Bezug auf bestimmte Zeichnungen beschrieben, aber die Erfindung ist nicht darauf beschränkt, sondern nur durch die Ansprüche. Die beschriebenen Zeichnungen sind nur schematisch und nicht einschränkend. In den Zeichnungen kann die Größe einiger Elemente übertrieben sein und nicht im Maßstab zur Veranschaulichung gezeichnet werden.

Wenn ein unbestimmter oder ein bestimmter Artikel verwendet wird und/oder wenn auf ein einzelnes Substantiv Bezug genommen wird, z.B. "ein", "eine", "der", "die", "das", schließt dies einen Plural dieses Substantivs ein, sofern nicht ausdrücklich etwas anderes angegeben ist.

Darüber hinaus werden die Begriffe "erste", "zweite", "dritte" und dergleichen in der Beschreibung und in den Ansprüchen zur Unterscheidung zwischen ähnlichen Elementen und nicht unbedingt zur Beschreibung einer sequentiellen oder chronologischen Reihenfolge verwendet. Es ist zu verstehen, dass die so verwendeten Begriffe unter geeigneten Umständen austauschbar sind und dass die Ausführungsformen der hierin beschriebenen Erfindung in anderer Abfolge als den hierin beschriebenen oder veranschaulichten funktionieren können.

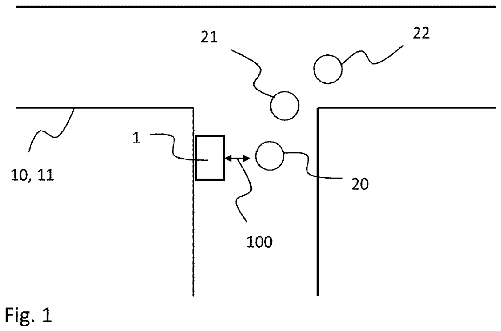

In **Fig. 1** ist ein System gemäß einem Ausführungsbeispiel der vorliegenden Erfindung gezeigt. Eine Zeit- und/oder Anwesenheitserfassungseinrichtung 1 zur Zeit- und/oder Anwesenheitserfassung von Personen 20, 21, 22 ist in einem Gebäude 10 oder Areal 11 angeordnet. Typischerweise befindet sich die Zeit- und/oder Anwesenheitserfassungseinrichtung 1 in einem Eingangsbereich oder in Eingangsnähe des Gebäudes, sodass die Personen 20, 21, 22 beim Betreten oder Verlassen des Gebäudes 10 oder Areals 11 mit der Zeit- und/oder Anwesenheitserfassungseinrichtung 1 interagieren können. Bei dem Gebäude 10 oder Areal 11 kann es sich beispielsweise um ein Krankenhaus oder einen Gewerbebetrieb oder ein anderes Unternehmen handeln. Eine Nutzerinteraktion 100 einer Person 20 mit der Zeit- und/oder Anwesenheitserfassungseinrichtung 1 ist beispielhaft durch einen Pfeil dargestellt. Die Nutzerinterkationen können beispielsweise über einen Sensor der Zeit- und/oder Anwesenheitserfassungseinrichtung 1 identifiziert werden und umfassen typischerweise das Erkennen bzw. Auslesen einer Identifikationsinformation der Person 20, um die Anwesenheitszeiten oder Arbeitszeiten der Person 20 nachzuhalten. Es ist denkbar, dass die Person 20 über die Zeit- und/oder Anwesenheitserfassungseinrichtung 1 auf ihre personenbezogenen Daten zugreifen kann und beispielsweise Urlaubstage eintragen oder anfragen kann oder ihre Personalstammdaten einsehen oder ändern kann. Es ist ferner denkbar, dass eine Person 20, 21, 22 über die Zeit- und/oder Anwesenheitserfassungseinrichtung 1 mit einer Personalabteilung des Unternehmens kommunizieren kann, dem die Zeit- und/oder Anwesenheitserfassungseinrichtung 1 zugeordnet ist.

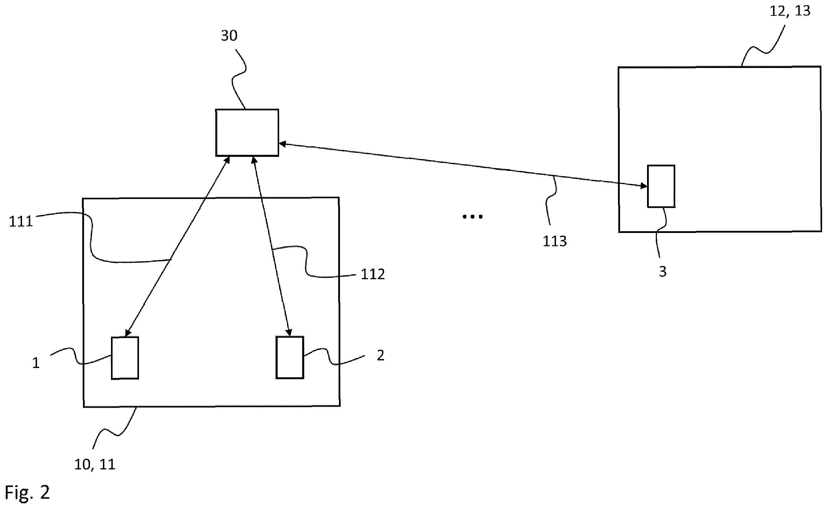

In **Fig. 2** ist ein System gemäß einem Ausführungsbeispiel der vorliegenden Erfindung gezeigt. In einem Gebäude 10 oder Areal 11 ist eine Zeit- und/oder Anwesenheitserfassungseinrichtung 1 angeordnet. Ferner ist in dem Gebäude 10 oder Areal 11 eine zusätzliche Zeit- und/oder Anwesenheitserfassungseinrichtung 2 angeordnet, die beispielsweise baugleich zu der Zeit- und/oder Anwesenheitserfassungseinrichtung 1 ausgebildet sein kann. Die Zeit- und/oder Anwesenheitserfassungseinrichtung 1 weist eine Kommunikationsschnittstelle auf, über die eine Kommunikationsverbindung 111 mit einem Serversystem 30 herstellbar ist. Die zusätzliche Zeit- und/oder Anwesenheitserfassungseinrichtung 2 weist ebenso eine Kommunikationsschnittstelle auf, über die eine Kommunikationsverbindung 112 mit einem Serversystem 30 herstellbar ist. Das Serversystem 30 kann innerhalb oder außerhalb des Gebäudes 10 oder Areals 11 angeordnet sein. Es ist denkbar, dass das Serversystem 30 einen oder mehrere Server umfasst, die an unterschiedlichen Orten bzw. Standorten angeordnet sind.

Ferner ist ein weiteres Gebäude 12 oder weiteres Areal 13 dargestellt, in dem eine weitere Zeit- und/oder Anwesenheitserfassungseinrichtung 3 angeordnet ist. Die weitere Zeit- und/oder Anwesenheitserfassungseinrichtung 3 ist insbesondere dem gleichen Unternehmen oder der gleichen Unternehmensgruppe zugeordnet wie die Zeit- und/oder Anwesenheitserfassungseinrichtung 1. Auch die weitere Zeit- und/oder Anwesenheitserfassungseinrichtung 3 weist eine Kommunikationsschnittstelle auf, über die eine Kommunikationsverbindung 113 mit einem Serversystem 30 herstellbar ist.

Die Kommunikationsverbindungen 111, 112, 113 können jeweils drahtlos und/oder drahtgebunden ausgebildet sein. Die Kommunikationsverbindungen 111, 112, 113 können insbesondere mithilfe eines internen Unternehmensnetzwerks ausgebildet sein.

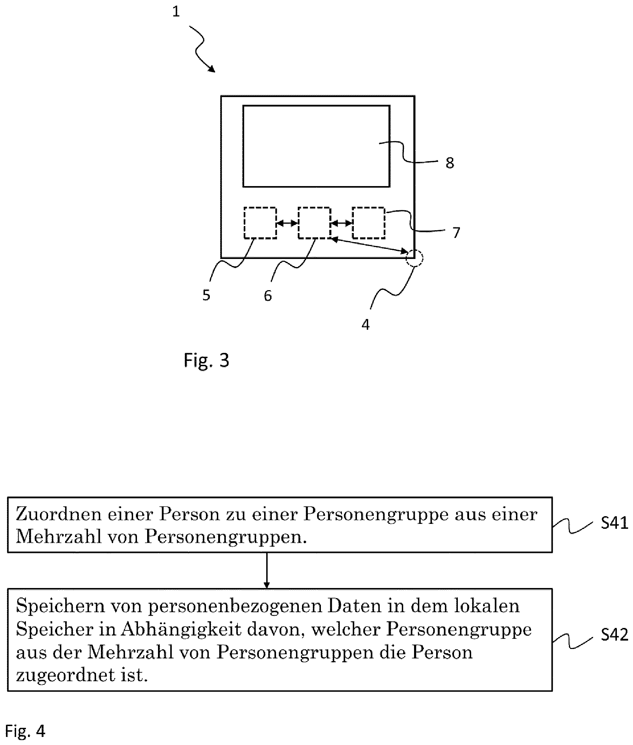

In **Fig. 3** ist schematisch eine Zeit- und/oder Anwesenheitserfassungseinrichtung 1 gemäß einem Ausführungsbeispiel der vorliegenden Erfindung gezeigt. Die Zeit- und/oder Anwesenheitserfassungseinrichtung 1 ist zur Zeit- und/oder Anwesenheitserfassung von Personen vorgesehen. Die Zeit- und/oder Anwesenheitserfassungseinrichtung 1 weist einen lokalen Speicher 5 sowie eine Kommunikationsschnittstelle 4 zur Kommunikation mit einem Serversystem 30 über eine Kommunikationsverbindung 111 auf. In dem lokalen Speicher 5 sind personenbezogene Daten speicherbar.

Ferner umfasst die Zeit- und/oder Anwesenheitserfassungseinrichtung 1 eine interne Steuereinrichtung 6, insbesondere Computermittel, sowie einen Sensor 7 zur Detektion von Nutzerinteraktionen, die Nutzer an der Zeit- und/oder Anwesenheitserfassungseinrichtung 1 ausführen. Des Weiteren umfasst die Zeit- und/oder Anwesenheitserfassungseinrichtung 1 einen Bildschirm 8, auf dem Informationen, beispielsweise personenbezogene Daten, dargestellt werden können. Der Bildschirm 8 kann gleichzeitig in Form eines Touchscreens als Eingabeeinrichtung ausgebildet sein. Es ist alternativ oder zusätzlich denkbar, dass die Zeit- und/oder Anwesenheitserfassungseinrichtung 1 eine von dem Bildschirm separate Eingabeeinrichtung, beispielsweise eine Tastatur oder Knöpfe, aufweist. Alternativ oder zusätzlich kann die Zeit- und/oder Anwesenheitserfassungseinrichtung 1 beispielsweise eine Signallampe aufweisen. Alternativ oder zusätzlich kann die Zeit- und/oder Anwesenheitserfassungseinrichtung 1 beispielsweise eine akustische Wiedergabeeinrichtung und/oder eine akustische Eingabeeinrichtung aufweisen.

Mithilfe der in den Figuren 1 bis 3 dargestellten Ausführungsbeispiele ist ein erfindungsgemäßes Verfahren implementierbar.

In **Fig. 4** ist schematisch eine Darstellung eines Ausführungsbeispiels der vorliegenden Erfindung gezeigt. In einem Schritt S41 erfolgt ein Zuordnen einer Person zu einer Personengruppe aus einer Mehrzahl von Personengruppen. Die Mehrzahl von Personengruppen umfasst insbesondere zumindest eine erste Personengruppe und eine zweite Personengruppe. Es ist denkbar, dass die Mehrzahl von Personengruppen neben der ersten und zweiten Personengruppe weitere Personengruppen umfasst. In einem Schritt S42 erfolgt ein Speichern von personenbezogenen Daten in dem lokalen Speicher 5 in Abhängigkeit davon, welcher Personengruppe aus der Mehrzahl von Personengruppen die Person zugeordnet ist.

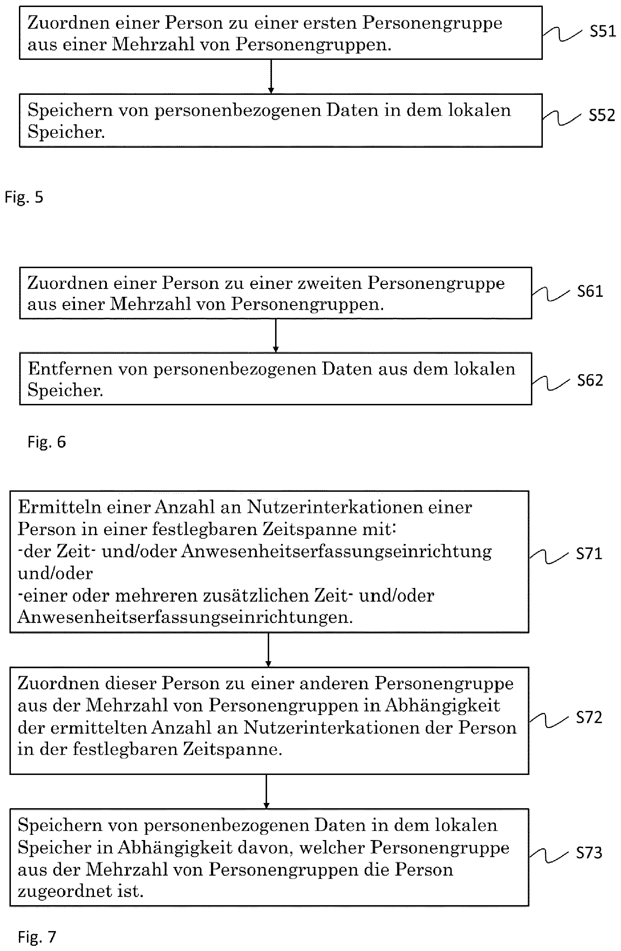

In **Fig. 5** ist schematisch eine Darstellung eines Ausführungsbeispiels der vorliegenden Erfindung gezeigt. In einem Schritt S51 erfolgt ein Zuordnen einer Person zu einer ersten Personengruppe aus einer Mehrzahl von Personengruppen. In einem Schritt S52 erfolgt ein Speichern von personenbezogenen Daten in dem lokalen Speicher 5, insbesondere in dem lokalen Speicher 5 der Zeit- und/oder Anwesenheitserfassungseinrichtung 1. Das Speichern von personenbezogenen Daten in dem lokalen Speicher 5 erfolgt dabei infolge der Zuordnung der Person zur ersten Personengruppe in Schritt S51. Insbesondere werden personenbezogene Daten für alle Personen, die der ersten Personengruppe zugeordnet sind, in dem lokalen Speicher 5 gespeichert. Die erste Personengruppe umfasst insbesondere solche Personen, die regelmäßig an dem Standort anwesend sind, an dem die Zeit- und/oder Anwesenheitserfassungseinrichtung 1 angeordnet ist.

In **Fig. 6** ist schematisch eine Darstellung eines Ausführungsbeispiels der vorliegenden Erfindung gezeigt. In einem Schritt S61 erfolgt ein Zuordnen einer Person zu einer zweiten Personengruppe aus einer Mehrzahl von Personengruppen. In einem Schritt S62 erfolgt ein Entfernen von personenbezogenen Daten aus dem lokalen Speicher 5, insbesondere aus dem lokalen Speicher 5 der Zeit- und/oder Anwesenheitserfassungseinrichtung 1. Das Entfernen von personenbezogenen Daten aus dem lokalen Speicher 5 erfolgt dabei infolge der Zuordnung der Person zur zweiten Personengruppe in Schritt S61. Insbesondere werden personenbezogene Daten für alle Personen, die der zweiten Personengruppe zugeordnet sind, nicht in dem lokalen Speicher 5 gespeichert und/oder infolge der Zuordnung zur zweiten Personengruppe aus dem lokalen Speicher 5 entfernt. Die zweite Personengruppe umfasst insbesondere solche Personen, die selten oder nie an dem Standort anwesend sind, an dem die Zeit- und/oder Anwesenheitserfassungseinrichtung 1 angeordnet ist.

In **Fig. 7** ist schematisch eine Darstellung eines Ausführungsbeispiels der vorliegenden Erfindung gezeigt. In einem Schritt S71 erfolgt ein Ermitteln einer Anzahl an Nutzerinterkationen einer Person in einer festlegbaren Zeitspanne mit:
- der Zeit- und/oder Anwesenheitserfassungseinrichtung 1 und/oder
- einer oder mehreren zusätzlichen Zeit- und/oder Anwesenheitserfassungseinrichtungen 2. Die eine einer oder mehreren zusätzlichen Zeit- und/oder Anwesenheitserfassungseinrichtungen 2 sind dabei insbesondere an dem gleichen Gebäude 10 oder Areal 11 angeordnet, wie die Zeit- und/oder Anwesenheitserfassungseinrichtung 1. In einem Schritt S72 erfolgt ein Zuordnen dieser Person zu einer anderen Personengruppe aus der Mehrzahl von Personengruppen in Abhängigkeit der ermittelten Anzahl an Nutzerinterkationen der Person in der festlegbaren Zeitspanne. In einem Schritt S73 erfolgt ein Speichern von personenbezogenen Daten in dem lokalen Speicher in Abhängigkeit davon, welcher Personengruppe aus der Mehrzahl von Personengruppen die Person zugeordnet ist. Durch eine derartige Änderung der Zuordnung einer Person zu einer bestimmten Personengruppe auf Grundlage der Nutzungshistorie von Zeit- und/oder Anwesenheitserfassungseinrichtungen 1, 2 durch diese Person, kann eine dynamische Speicherverwaltung erfolgen, wobei das System sich an Änderungen der Verhaltens- bzw. des Anwesenheitsmusters von Personen anpassen kann.

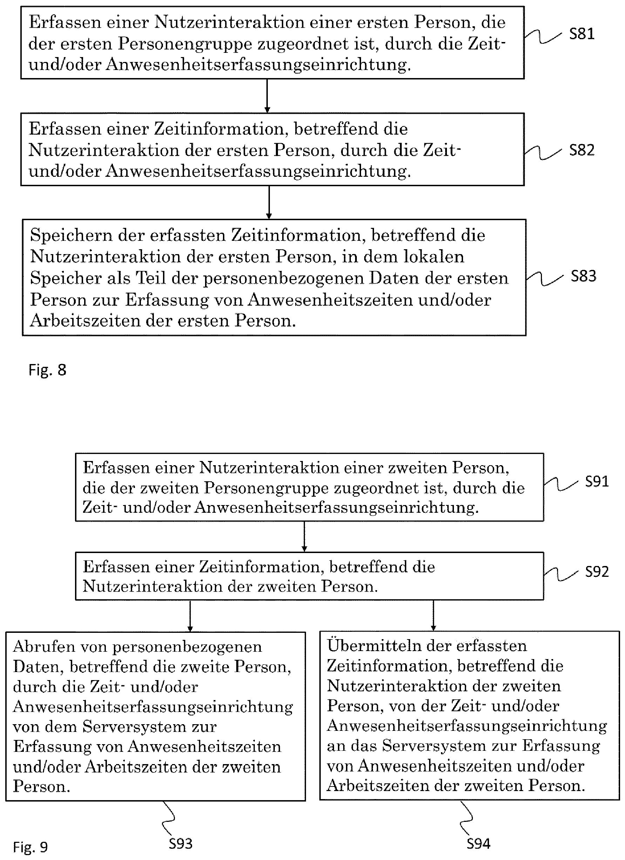

In **Fig. 8** ist schematisch eine Darstellung eines Ausführungsbeispiels der vorliegenden Erfindung gezeigt. In einem Schritt S81 erfolgt ein Erfassen einer Nutzerinteraktion einer ersten Person, die der ersten Personengruppe zugeordnet ist, durch die Zeit- und/oder Anwesenheitserfassungseinrichtung 1. In einem Schritt S82 erfolgt ein Erfassen einer Zeitinformation, betreffend die Nutzerinteraktion der ersten Person, durch die Zeit- und/oder Anwesenheitserfassungseinrichtung 1. In einem Schritt S83 erfolgt ein Speichern der erfassten Zeitinformation, betreffend die Nutzerinteraktion der ersten Person, in dem lokalen Speicher 5 als Teil der personenbezogenen Daten der ersten Person zur Erfassung von Anwesenheitszeiten und/oder Arbeitszeiten der ersten Person. Für eine solche Person, die der ersten Personengruppe zugeordnet ist, kann somit in vorteilhafterweise bei einer Buchung bzw. Nutzerinteraktion zur Arbeitszeiterfassung oder Anwesenheitserfassung auf eine Kommunikation mit dem Serversystem 30 verzichtet werden, was beispielsweise die Netzauslastung und Latenz verringert. Hierdurch können Wartezeiten an der Zeit- und/oder Anwesenheitserfassungseinrichtung 1 minimiert und Energie gespart werden.

In **Fig. 9** ist schematisch eine Darstellung eines Ausführungsbeispiels der vorliegenden Erfindung gezeigt. In einem Schritt 91 erfolgt ein Erfassen einer Nutzerinteraktion einer zweiten Person, die der zweiten Personengruppe zugeordnet ist, durch die Zeit- und/oder Anwesenheitserfassungseinrichtung 1. In einem Schritt S92 erfolgt ein Erfassen einer Zeitinformation, betreffend die Nutzerinteraktion der zweiten Person. Vor, während und/oder nach Schritt S92 wird ein Schritt S93 durchgeführt. Alternativ oder zusätzlich zu Schritt S93 wird nach Schritt S92 ein Schritt S94 durchgeführt. In Schritt S93 erfolgt ein Abrufen von personenbezogenen Daten, betreffend die zweite Person, durch die Zeit- und/oder Anwesenheitserfassungseinrichtung 1 von dem Serversystem zur Erfassung von Anwesenheitszeiten und/oder Arbeitszeiten der zweiten Person. In Schritt S94 erfolgt ein Übermitteln der erfassten Zeitinformation, betreffend die Nutzerinteraktion der zweiten Person, von der Zeit- und/oder Anwesenheitserfassungseinrichtung 1 an das Serversystem 30 zur Erfassung von Anwesenheitszeiten und/oder Arbeitszeiten der zweiten Person. Bei der zweiten Person handelt es sich um eine Person die der zweiten Personengruppe zugeordnet ist, also vorzugsweise um eine Person, die nie oder selten am Standort der Zeit- und/oder Anwesenheitserfassungseinrichtung 1 anwesend ist. Die personenbezogenen Daten dieser zweiten Person sind daher nicht in dem lokalen Speicher 5 gespeichert. Stattdessen erfolgt zur Erfassung von Anwesenheitszeiten und/oder Arbeitszeiten für diese zweite Person eine Kommunikation mit dem Serversystem 30.

Merkmale der in den Figuren 4 bis 9 dargestellten Ausführungsbeispiele können untereinander kombiniert werden.

### Bezugszeichenliste

- 1: Zeit- und/oder Anwesenheitserfassungseinrichtung
- 2: zusätzliche Zeit- und/oder Anwesenheitserfassungseinrichtung
- 3: weitere Zeit- und/oder Anwesenheitserfassungseinrichtung
- 4: Kommunikationsschnittstelle
- 5: lokaler Speicher
- 6: Steuereinrichtung
- 7: Sensor
- 8: Bildschirm
- 10: Gebäude
- 11: Areal
- 12: weiteres Gebäude
- 13: weiteres Areal
- 20 bis 22: Personen
- 30: Serversystem
- 100: Nutzerinteraktion
- 111 bis 113: Kommunikationsverbindungen
- S41 - S42: Schritte
- S51 - S52: Schritte
- S61 - S62: Schritte
- S71 - S73: Schritte
- S81 - S83: Schritte
- S91 - S94: Schritte

## Patentansprüche

1. Zeit- und/oder Anwesenheitserfassungseinrichtung (1) zur Zeit- und/oder Anwesenheitserfassung von Personen (20, 21, 22),
wobei die Zeit- und/oder Anwesenheitserfassungseinrichtung (1) einen lokalen Speicher (5) aufweist oder mit einem lokalen Speicher (5) verbunden ist, wobei die Zeit- und/oder Anwesenheitserfassungseinrichtung (1) eine Kommunikationsschnittstelle (4) zur Kommunikation mit einem Serversystem (30) aufweist,
wobei in dem lokalen Speicher (5) personenbezogene Daten speicherbar sind,
wobei die Zeit- und/oder Anwesenheitserfassungseinrichtung (1) derart konfiguriert ist, dass eine Speicherung von personenbezogenen Daten in dem lokalen Speicher in Abhängigkeit davon erfolgt, welcher Personengruppe aus einer Mehrzahl von Personengruppen eine Person (20, 21, 22) zugeordnet ist,
wobei die Mehrzahl von Personengruppen zumindest eine erste Personengruppe umfasst,
wobei die Mehrzahl von Personengruppen eine zweite Personengruppe umfasst,
wobei personenbezogenen Daten betreffend Personen (20, 21, 22), die der ersten Personengruppe zugeordnet sind, in dem lokalen Speicher (5) gespeichert werden,
wobei die personenbezogenen Daten betreffend Personen (20, 21, 22), die der zweiten Personengruppe zugeordnet sind, nicht in dem lokalen Speicher (5) gespeichert werden,
wobei die Zeit- und/oder Anwesenheitserfassungseinrichtung (1) derart konfiguriert ist, dass die, insbesondere automatische, Zuordnung einer Person (20, 21, 22) zu einer anderen Personengruppe unter Berücksichtigung der freien Speicherkapazität des lokalen Speichers (5) erfolgt, wobei die andere Personengruppe die erste Personengruppe oder die zweite Personengruppe ist.

2. Zeit- und/oder Anwesenheitserfassungseinrichtung (1) nach Anspruch 1,
wobei die Zeit- und/oder Anwesenheitserfassungseinrichtung (1) - bei einer Nutzerinteraktion einer ersten Person (20, 21, 22), die der ersten Personengruppe zugeordnet ist, mit der die Zeit- und/oder Anwesenheitserfassungseinrichtung (1) - zur Erfassung einer Zeitinformation konfiguriert ist,
wobei die Zeit- und/oder Anwesenheitserfassungseinrichtung (1) dazu konfiguriert ist, die erfasste Zeitinformation, betreffend die Nutzerinteraktion der ersten Person (20, 21, 22), in dem lokalen Speicher (5) zu speichern, vorzugsweise als Teil der personenbezogenen Daten der ersten Person (20, 21, 22) zur Erfassung von Anwesenheitszeiten und/oder Arbeitszeiten der ersten Person (20, 21, 22).

3. Zeit- und/oder Anwesenheitserfassungseinrichtung (1) nach einem der vorherhergehenden Ansprüche,
wobei personenbezogene Daten betreffend Personen (20, 21, 22), die der zweiten Personengruppe zugeordnet sind, durch die Zeit- und/oder Anwesenheitserfassungseinrichtung (1) von dem Serversystem (30) abrufbar sind,
vorzugsweise wobei die personenbezogenen Daten betreffend Personen (20, 21, 22), die der zweiten Personengruppe zugeordnet sind, in dem Serversystem (30) gespeichert sind.

4. Zeit- und/oder Anwesenheitserfassungseinrichtung (1) nach einem der vorhergehenden Ansprüche, wobei die personenbezogenen Daten ein personenbezogenes Arbeitszeitprofil, insbesondere zur Erfassung von Anwesenheitszeiten und/oder Arbeitszeiten pro Person, umfassen.

5. Zeit- und/oder Anwesenheitserfassungseinrichtung (1) nach einem der vorhergehenden Ansprüche, wobei die Zeit- und/oder Anwesenheitserfassungseinrichtung (1) derart konfiguriert ist, dass eine Person (20, 21, 22):
- in Abhängigkeit einer Anzahl an Nutzerinterkationen dieser Person (20, 21, 22), insbesondere in einer festlegbaren Zeitspanne, mit der Zeit- und/oder Anwesenheitserfassungseinrichtung (1); und/oder
- in Abhängigkeit einer Anzahl an Nutzerinterkationen dieser Person (20, 21, 22), insbesondere in einer festlegbaren Zeitspanne, mit einer oder mehreren zusätzlichen Zeit- und/oder Anwesenheitserfassungseinrichtungen (2), die dem gleichen Gebäude (10) und/oder Areal (11) zugeordnet sind wie die Zeit- und/oder Anwesenheitserfassungseinrichtung (1),
insbesondere automatisch, einer anderen Personengruppe aus der Mehrzahl von Personengruppen zugeordnet wird.

6. Zeit- und/oder Anwesenheitserfassungseinrichtung (1) nach einem der vorhergehenden Ansprüche,
wobei die Zeit- und/oder Anwesenheitserfassungseinrichtung (1) derart konfiguriert ist, dass:
- bei einer Änderung der Zuordnung einer Person (20, 21, 22) von der ersten Personengruppe zu der zweiten Personengruppe, die in dem lokalen Speicher (5) vorhanden personenbezogenen Daten betreffend diese Person (20, 21, 22) teilweise oder vollständig aus dem lokalen Speicher (5) entfernt werden; und/oder
- bei einer Änderung der Zuordnung einer Person (20, 21, 22) von der zweiten Personengruppe zu der ersten Personengruppe, personenbezogen Daten betreffend diese Person (20, 21, 22) durch die Zeit- und/oder Anwesenheitserfassungseinrichtung (1) von dem Serversystem (30) empfangen werden, wobei die empfangenen personenbezogenen Daten in dem lokalen Speicher (5) gespeichert werden.

7. Zeit- und/oder Anwesenheitserfassungseinrichtung (1) nach einem der vorhergehenden Ansprüche,
wobei für eine Person (20, 21, 22), vorzugsweise durch das Serversystem (30) und/oder über eine Interaktion mit einer Eingabeeinrichtung der Zeit- und/oder Anwesenheitserfassungseinrichtung (1):
- eine Zuordnung dieser Person (20, 21, 22) zu einer Personengruppe aus der Mehrzahl von Personengruppen, insbesondere zumindest zur ersten Personengruppe oder zur zweiten Personengruppe, festlegbar und/oder änderbar ist;
und/oder
- eine Einstellung festlegbar ist, die eine automatische Zuordnung dieser Person zu einer anderen Personengruppe der Mehrzahl von Personengruppen verhindert.

8. System, aufweisend eine Zeit- und/oder Anwesenheitserfassungseinrichtung (1) nach einem der vorhergehenden Ansprüche,
wobei die Zeit- und/oder Anwesenheitserfassungseinrichtung (1) vorzugsweise an oder in einem Gebäude (10) und/oder Areal (11) angeordnet ist.

9. System nach Anspruch 8,
wobei das System ferner das Serversystem (30) umfasst, wobei das Serversystem (30) insbesondere zur Kommunikation mit der Zeit- und/oder Anwesenheitserfassungseinrichtung (1) über die Kommunikationsschnittstelle (4) der Zeit- und/oder Anwesenheitserfassungseinrichtung (1) konfiguriert ist.

10. System nach einem der Ansprüche 8 oder 9,
wobei eine weitere Zeit- und/oder Anwesenheitserfassungseinrichtung (3) an oder in einem weiteren Gebäude (12) und/oder einem weiteren Areal (13) angeordnet ist,
wobei die weitere Zeit- und/oder Anwesenheitserfassungseinrichtung (3) eine Kommunikationsschnittstelle zur Kommunikation mit dem Serversystem (30) aufweist, wobei in einem weiteren lokalen Speicher der weiteren Zeit- und/oder Anwesenheitserfassungseinrichtung (3) personenbezogene Daten betreffend Personen einer weiteren ersten Personengruppe gespeichert sind,
wobei die erste Personengruppe und die weitere erste Personengruppe zumindest teilweise unterschiedliche Personen umfassen.

11. Verfahren zum Betreiben einer Zeit- und/oder Anwesenheitserfassungseinrichtung (1) nach einem der Ansprüche 1 bis 7 oder eines Systems nach einem der Ansprüche 8 bis 10,
wobei ein Speichern von personenbezogenen Daten in dem lokalen Speicher (5) in Abhängigkeit davon durchgeführt wird, welcher Personengruppe aus einer Mehrzahl von Personengruppen eine Person (20, 21, 22) zugeordnet ist,
wobei die Mehrzahl von Personengruppen zumindest eine erste Personengruppe umfasst,
wobei die Mehrzahl von Personengruppen eine zweite Personengruppe umfasst,
wobei personenbezogenen Daten betreffend Personen (20, 21, 22), die der ersten Personengruppe zugeordnet sind, in dem lokalen Speicher (5) gespeichert werden, wobei die personenbezogenen Daten betreffend Personen (20, 21, 22), die der zweiten Personengruppe zugeordnet sind, nicht in dem lokalen Speicher (5) gespeichert werden,
wobei die, insbesondere automatische, Zuordnung einer Person (20, 21, 22) zu einer anderen Personengruppe unter Berücksichtigung der freien Speicherkapazität des lokalen Speichers (5) erfolgt, wobei die andere Personengruppe die erste Personengruppe oder die zweite Personengruppe ist.

12. Verfahren nach Anspruch 11, wobei die Zeit- und/oder Anwesenheitserfassungseinrichtung (1) - bei einer Nutzerinteraktion einer ersten Person (20, 21, 22), die der ersten Personengruppe zugeordnet ist, mit der Zeit- und/oder Anwesenheitserfassungseinrichtung (1) - eine Zeitinformation erfasst, wobei die Zeit- und/oder Anwesenheitserfassungseinrichtung (1) die erfasste Zeitinformation in dem lokalen Speicher (5) speichert, vorzugsweise als Teil der personenbezogenen Daten betreffend die erste Person (20, 21, 22), besonders bevorzugt zur Erfassung von Anwesenheitszeiten und/oder Arbeitszeiten der ersten Person (20, 21, 22).

13. Computerprogrammprodukt, umfassend Befehle, die bei der Ausführung durch Computermittel, insbesondere durch eine Zeit- und/oder Anwesenheitserfassungseinrichtung (1) gemäß einem der Ansprüche 1 bis 7 und/oder durch ein System gemäß einem der Ansprüche 8 bis 10, diese veranlassen, ein Verfahren nach einem der Ansprüche 11 oder 12 durchzuführen.

## Claims

1. A time and/or attendance recording device (1) for time and/or attendance recording of persons (20, 21, 22), wherein the time and/or attendance recording device (1) has a local memory (5) or is connected to a local memory (5), wherein the time and/or attendance recording device (1) has a communication interface (4) for communication with a server system (30),
wherein personal data can be stored in the local memory (5),
wherein the time and/or attendance recording device (1) is configured in such manner that personal data is stored in the local memory depending on to which group of people from a plurality of groups of people a person (20, 21, 22) is assigned,
wherein the plurality of groups of people comprises at least a first group of people, wherein the plurality of groups of people comprises a second group of people, wherein personal data relating to persons (20, 21, 22), who are assigned to the first group of people, is stored in the local memory (5),
wherein the personal data relating to persons (20, 21, 22), who are assigned to the second group of people, is not stored in the local memory (5),
wherein the time and/or attendance recording device (1) is configured in such manner that the, in particular automatic, assignment of a person (20, 21, 22) to another group of people takes place taking into account the free storage capacity of the local memory (5), wherein the other group of people is the first group of people or the second group of people.

2. The time and/or attendance recording device (1) according to claim 1, wherein the time and/or attendance recording device (1) is configured to record time information upon user interaction of a first person (20, 21, 22), who is assigned to the first group of people, with the time and/or attendance recording device (1),
wherein the time and/or attendance recording device (1) is configured to store the recorded time information relating to the user interaction of the first person (20, 21, 22) in the local memory (5), preferably as part of the personal data of the first person (20, 21, 22) for recording attendance times and/or working times of the first person (20, 21, 22).

3. The time and/or attendance recording device (1) according to one of the preceding claims, wherein personal data relating to persons (20, 21, 22), who are assigned to the second group of people, can be retrieved from the server system (30) by the time and/or attendance recording device (1),
preferably wherein the personal data relating to persons (20, 21, 22), who are assigned to the second group of people, is stored in the server system (30).

4. The time and/or attendance recording device (1) according to one of the preceding claims, wherein the personal data comprises a personal working time profile, in particular for recording attendance times and/or working times per person.

5. The time and/or attendance recording device (1) according to one of the preceding claims, wherein the time and/or attendance recording device (1) is configured in such manner that a person (20, 21, 22):
- depending on a number of user interactions of this person (20, 21, 22), in particular in a definable period of time, with the time and/or attendance recording device (1); and/or
- depending on a number of user interactions of this person (20, 21, 22), in particular in a definable period of time, with one or a plurality of additional time and/or attendance recording devices (2) which are assigned to the same building (10) and/or area (11) as the time and/or attendance recording device (1),
is assigned, in particular automatically, to another group of people from the plurality of groups of people.

6. The time and/or attendance recording device (1) according to one of the preceding claims,
wherein the time and/or attendance recording device (1) is configured in such manner that:
- if the assignment of a person (20, 21, 22) changes from the first group of people to the second group of people, the personal data relating to this person (20, 21, 22) present in the local memory (5) is partially or completely removed from the local memory (5); and/or
- if the assignment of a person (20, 21, 22) changes from the second group of people to the first group of people, personal data relating to this person (20, 21, 22) is received by the time and/or attendance recording device (1) from the server system (30), wherein the received personal data is stored in the local memory (5).

7. The time and/or attendance recording device (1) according to one of the preceding claims,
wherein for a person (20, 21, 22), preferably through the server system (30) and/or via an interaction with an input device of the time and/or attendance recording device (1):
- an assignment of this person (20, 21, 22) to a group of people from the plurality of groups of people, in particular at least to the first group of people or to the second group of people, can be specified and/or changed;
and/or
- a setting can be specified that prevents this person from being automatically assigned to another group of people of the plurality of groups of people.

8. A system having a time and/or attendance recording device (1) according to one of the preceding claims,
wherein the time and/or attendance recording device (1) is preferably arranged on or in a building (10) and/or area (11).

9. The system according to claim 8,
wherein the system further comprises the server system (30), wherein the server system (30) is configured in particular for communication with the time and/or attendance recording device (1) via the communication interface (4) of the time and/or attendance recording device (1).

10. The system according to one of claims 8 or 9,
wherein a further time and/or attendance recording device (3) is arranged on or in a further building (12) and/or a further area (13),
wherein the further time and/or attendance recording device (3) has a communication interface for communication with the server system (30), wherein personal data relating to persons of a further first group of people is stored in a further local memory of the further time and/or attendance recording device (3), wherein the first group of people and the further first group of people comprise at least partially different people.

11. A method for operating a time and/or attendance recording device (1) according to one of claims 1 to 7 or a system according to one of claims 8 to 10, wherein storing of personal data in the local memory (5) is carried out depending on to which group of people from a plurality of groups of people a person (20, 21, 22) is assigned,
wherein the plurality of groups of people comprises at least a first group of people, wherein the plurality of groups of people comprises a second group of people, wherein personal data relating to persons (20, 21, 22), who are assigned to the first group of people, is stored in the local memory (5),
wherein the personal data relating to persons (20, 21, 22), who are assigned to the second group of people, is not stored in the local memory (5),
wherein the, in particular automatic, assignment of a person (20, 21, 22) to another group of people takes place taking into account the free storage capacity of the local memory (5), wherein the other group of people is the first group of people or the second group of people.

12. The method according to claim 11, wherein the time and/or attendance recording device (1) records time information upon user interaction of a first person (20, 21, 22), who is assigned to the first group of people, with the time and/or
attendance recording device (1), wherein the time and/or attendance recording device (1) stores the recorded time information in the local memory (5), preferably as part of the personal data relating to the first person (20, 21, 22), particularly preferably for recording attendance times and/or working times of the first person (20, 21, 22).

13. A computer programme product comprising instructions which, when executed by computer means, in particular by a time and/or attendance recording device (1) according to one of claims 1 to 7 and/or by a system according to one of claims 8 to 10, cause the latter to carry out a method according to one of claims 11 or 12.

## Revendications

1. Dispositif de détection d'heure et/ou de présence (1) permettant de détecter l'heure et/ou la présence de personnes (20, 21, 22), dans lequel le dispositif de détection d'heure et/ou de présence (1) présente une mémoire locale (5) ou est relié à une mémoire locale (5), dans lequel le dispositif de détection d'heure et/ou de présence (1) présente une interface de communication (4) pour une communication avec un système serveur (30), dans lequel des données à caractère personnel peuvent être stockées dans la mémoire locale (5),
dans lequel le dispositif de détection d'heure et/ou de présence (1) est conçu de telle sorte que des données à caractère personnel sont stockées dans la mémoire locale en fonction du groupe de personnes auquel une personne (20, 21, 22) est affectée parmi une pluralité de groupes de personnes, dans lequel la pluralité de groupes de personnes comprend au moins un premier groupe de personnes,
dans lequel la pluralité de groupes de personnes comprend un second groupe de personnes,
dans lequel des données à caractère personnel concernant des personnes (20, 21, 22) qui sont affectées au premier groupe de personnes sont stockées dans la mémoire locale (5),
dans lequel les données à caractère personnel concernant des personnes (20, 21, 22) qui sont affectées au second groupe de personnes ne sont pas stockées dans la mémoire locale (5),
dans lequel le dispositif de détection d'heure et/ou de présence (1) est conçu de telle sorte que l'affectation, en particulier automatique, d'une personne (20, 21, 22) à un autre groupe de personnes s'effectue en tenant compte de la capacité de stockage disponible de la mémoire locale (5), dans lequel l'autre groupe de personnes est le premier groupe de personnes ou le second groupe de personnes.

2. Dispositif de détection d'heure et/ou de présence (1) selon la revendication 1, dans lequel le dispositif de détection d'heure et/ou de présence (1) - lors d'une interaction utilisateur d'une première personne (20, 21, 22), qui est affectée au premier groupe de personnes avec le dispositif de détection d'heure et/ou de présence (1) - est conçu pour détecter une information temporelle,
dans lequel le dispositif de détection d'heure et/ou de présence (1) est conçu pour stocker l'information temporelle détectée, concernant l'interaction utilisateur de la première personne (20, 21, 22), dans la mémoire locale (5), de préférence sous forme de partie des données à caractère personnel de la première personne (20, 21, 22) pour la détection des heures de présence et/ou des heures de travail de la première personne (20, 21, 22).

3. Dispositif de détection d'heure et/ou de présence (1) selon l'une des revendications précédentes, dans lequel des données à caractère personnel concernant des personnes (20, 21, 22) qui sont affectées au second groupe de personnes peuvent être appelées par le dispositif de détection d'heure et/ou de présence (1) à partir du système serveur (30),
de préférence, dans lequel les données à caractère personnel concernant des personnes (20, 21, 22) qui sont affectées au second groupe de personnes sont stockées dans le système serveur (30).

4. Dispositif de détection d'heure et/ou de présence (1) selon l'une des revendications précédentes, dans lequel les données à caractère personnel comprennent un profil d'heures de travail personnel, en particulier pour la détection des heures de présence et/ou des heures de travail par personne.

5. Dispositif de détection d'heure et/ou de présence (1) selon l'une des revendications précédentes, dans lequel le dispositif de détection d'heure et/ou de présence (1) est conçu de telle sorte qu'une personne (20, 21, 22) :
- en fonction d'un nombre d'interactions utilisateur de cette personne (20, 21, 22), en particulier pendant un laps de temps définissable, avec le dispositif de détection d'heure et/ou de présence (1) ; et/ou
- en fonction d'un nombre d'interactions utilisateur de cette personne (20, 21, 22), en particulier pendant un laps de temps définissable, avec un ou plusieurs dispositifs de détection d'heure et/ou de présence (2) supplémentaires qui sont affectés au même bâtiment (10) et/ou à la même zone (11) que le dispositif de détection d'heure et/ou de présence (1),
est affectée, notamment automatiquement, à un autre groupe de personnes parmi la pluralité de groupes de personnes.

6. Dispositif de détection d'heure et/ou de présence (1) selon l'une des revendications précédentes,
dans lequel le dispositif détection d'heure et/ou de présence (1) est conçu de telle sorte que :
- en cas d'un changement d'affectation d'une personne (20, 21, 22) du premier groupe de personnes au second groupe de personnes, les données à caractère personnel concernant cette personne (20, 21, 22) présentes dans la mémoire locale (5) sont partiellement ou totalement supprimées de la mémoire locale (5) ; et/ou
- en cas d'un changement d'affectation d'une personne (20, 21, 22) du second groupe de personnes au premier groupe de personnes, des données à caractère personnel concernant cette personne (20, 21, 22) sont reçues par le dispositif de détection d'heure et/ou de présence (1) du système serveur (30), dans lequel les données à caractère personnel reçues sont stockées dans la mémoire locale (5).

7. Dispositif de détection d'heure et/ou de présence (1) selon l'une des revendications précédentes,
dans lequel pour une personne (20, 21, 22), de préférence par le système serveur (30) et/ou par l'intermédiaire d'une interaction avec un dispositif de saisie du dispositif de détection d'heure et/ou de présence (1) :
- une affectation de cette personne (20, 21, 22) à un groupe de personnes parmi la pluralité de groupes de personnes, en particulier au moins au premier groupe de personnes ou au second groupe de personnes, peut être établie et/ou modifiée ;
et/ou
- un paramètre peut être établi pour empêcher l'affectation automatique de cette personne à un autre groupe de personnes parmi la pluralité de groupes de personnes.

8. Système présentant un dispositif de détection d'heure et/ou de présence (1) selon l'une des revendications précédentes,
dans lequel le dispositif de détection d'heure et/ou de présence (1) est de préférence agencé sur ou dans un bâtiment (10) et/ou une zone (11).

9. Système selon la revendication 8,
dans lequel le système comprend en outre le système serveur (30), dans lequel le système serveur (30) est conçu en particulier pour une communication avec le dispositif de détection d'heure et/ou de présence (1) par l'intermédiaire de l'interface de communication (4) du dispositif de détection d'heure et/ou de présence (1).

10. Système selon l'une des revendications 8 ou 9,
dans lequel un autre dispositif de détection d'heure et/ou de présence (3) est agencé sur ou dans un autre bâtiment (12) et/ou une autre zone (13),
dans lequel l'autre dispositif de détection d'heure et/ou de présence (3) présente une interface de communication pour une communication avec le système serveur (30), dans lequel des données à caractère personnel concernant les personnes d'un autre premier groupe de personnes sont stockées dans une autre mémoire locale de l'autre dispositif de détection d'heure et/ou de présence (3), dans lequel le premier groupe de personnes et l'autre premier groupe de personnes comprennent des personnes au moins partiellement différentes.

11. Procédé pour faire fonctionner un dispositif de détection d'heure et/ou de présence (1) selon l'une des revendications 1 à 7 ou un système selon l'une des revendications 8 à 10,
dans lequel des données à caractère personnel sont stockées dans la mémoire locale (5) en fonction du groupe de personnes parmi une pluralité de groupes de personnes auquel une personne (20, 21, 22) est affectée,
dans lequel la pluralité de groupes de personnes comprend au moins un premier groupe de personnes,
dans lequel la pluralité de groupes de personnes comprend un second groupe de personnes,
dans lequel des données à caractère personnel concernant des personnes (20, 21, 22) qui sont affectées au premier groupe de personnes sont stockées dans la mémoire locale (5),
dans lequel les données à caractère personnel concernant des personnes (20, 21, 22) qui sont affectées au second groupe de personnes ne sont pas stockées dans la mémoire locale (5),
dans lequel l'affectation, notamment automatique, d'une personne (20, 21, 22) à un autre groupe de personnes s'effectue en tenant compte de la capacité de stockage libre de la mémoire locale (5), dans lequel l'autre groupe de personnes est le premier groupe de personnes ou le second groupe de personnes.

12. Procédé selon la revendication 11, dans lequel le dispositif de détection d'heure et/ou de présence (1) - lors d'une interaction utilisateur d'une première personne (20, 21, 22), qui est affectée au premier groupe de personnes, avec le dispositif de détection
d'heure et/ou de présence (1) - détecte une information temporelle, dans lequel le dispositif de détection d'heure et/ou de présence (1) stocke l'information temporelle détectée dans la mémoire locale (5), de préférence sous forme de partie des données à caractère personnel concernant la première personne (20, 21, 22), de manière particulièrement préférée pour la détection des heures de présence et/ou des heures de travail de la première personne (20, 21, 22).

13. Produit-programme informatique comprenant des commandes qui, lorsqu'elles sont exécutées par des moyens informatiques, en particulier par un dispositif de détection d'heure et/ou de présence (1) selon l'une des revendications 1 à 7 et/ou par un système selon l'une des revendications 8 à 10, les amènent à mettre en oeuvre un procédé selon l'une des revendications 11 ou 12.
